# EUROPEAN PATENT APPLICATION

(11) **EP 1 942 610 A1**
(43) Date of publication of application: **09.07.2008**
(21) Application number: 06811629.2
(22) Date of filing: 11.10.2006
(51) Int. Cl.: H04L 12/56, H04Q 7/22, H04Q 7/34

(54) **LAYERED MOBILE MANAGEMENT SYSTEM, ACCESS ROUTER, ANCHOR NODE, MOBILE COMMUNICATION SYSTEM, AND PATH ESTABLISHING METHOD**

(30) Priority: 25.10.2005 JP 2005310286
(71) Applicant: NEC Corporation, Minato-ku Tokyo 108-8001 (JP)
(72) Inventor: AKIYOSHI, Ippei, Tokyo 1088001 (JP)
(74) Representative: Vossius & Partner
(86) International application number: PCT/JP2006/320322
(87) International publication number: WO 2007/049459

(57) **Abstract**

In a hierarchical mobility management system, a roaming mobile terminal cannot perform handover at a high speed between anchor nodes when conducting AR return communication.

By use of functions of an access router including an AR return communication state management function to manage the communication state between terminals connected to the access router and an AR return communication notifying function to notify, at detection of new AR return communication, the new AR return communication to a visited anchor node, it is possible for the visited anchor node to conduct, before handover, route setting for the mobile terminal in the AR return communication. Therefore, it is possible at handover to include the route information in context information communicated between new and old visited anchor nodes, and hence a route change is possible between the visited anchor nodes without using a home network.

## Description

### TECHNICAL FIELD

The present invention relates to a mobile communication system, a hierarchical mobility management system, an access router, an anchor node, and a route setting method in which a roaming mobile terminal conducts handover between visited anchor nodes during communication with a terminal existing under control of the same router.

### RELATED ART

As a technique to implement mobility of a terminal on an Internet Protocol (IP) network, there has been known the Hierarchical Mobile IPv6 Mobility management (HMIPv6; reference is to be made to, for example, non-patent article 1). HMIPv6 is a method to reduce the period of time required for the binding update and to implement high-speed mobility, by hierarchically configuring management areas of mobility and by introducing a router serving as a relay node on a boundary between hierarchical management areas in addition to a router on a home link of a mobile terminal called Home Agent (HA) which manages mobility on Mobile IPv6 (MIPv6). The router as a relay node is called Mobility Anchor Point (MAP) and serves a role of a local HA for the mobile terminal. In a conventional hierarchical mobility management system employing HMIPv6, a mobile terminal conducts position registration to HA of the home link and to MAP of a visited link to thereby implement mobility of the terminal. Here, the terminal mobility is a property in which even if the terminal moves to a different network, IP communication before the movement can be continued.
Non-patent article 1: H. Soliman et al, "Hierarchical Mobile IPv6 Mobility management (HMIPv6)", [online], August 2005, IETF, [retrieved on October 3rd, 2005], Internet<http://www.ictf.org/rfc/rfc4140.txt>

### DISCLOSURE OF THE INVENTION

### PROBLEMS TO BE SOLVED BY THE INVENTION

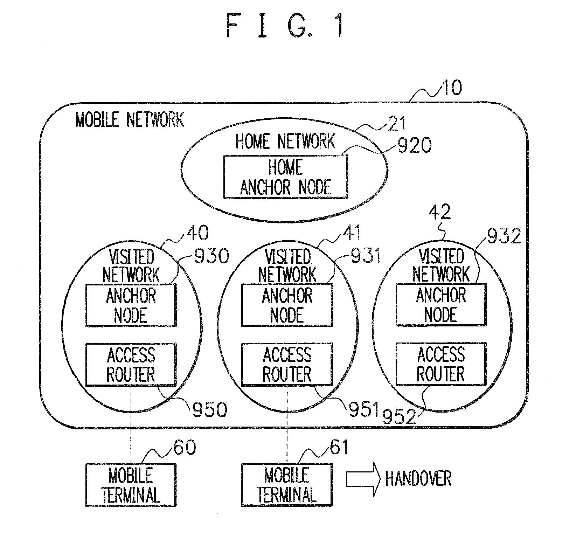

However, according to the HMPIv6 method described in non-patent article 1, there exist problems that the positional information is known to the communication partner at the MAP level at optimization of the route and the control signal for the optimal route setting in the visited link imposes load onto the MAP. To cope therewith, as shown in FIG. 1, it is considerable to employ a hierarchical edge mobility method in which from the Mobile Node (MN) function of Mobile IPv6 (MIPv6), the positional registration function for the MAP and the packet encapsulation/docapsulation function are transplanted to the Access Router (AR) as well as the positional registration function for the MAP, the packet encapsulation/decapsulation function, and the route optimization function are transplanted to the MAP to individually dispose tunnels between HA and MAP and between MAP and AR.

FIG. 1 is a block diagram showing a configuration example of a hierarchical mobility management system adopting the hierarchical edge mobility method. The management system shown in FIG. 1 is a hierarchical mobility management system to manage mobility of mobile terminals 60 and 61 on a mobile network 10 and includes a home anchor node 920, anchor nodes 930 to 932, access routers 950 to 952, and mobile terminals 60 and 61. The mobile network 10 is an IP network to which the mobile terminals 60 and 61 are connectible and includes a home network 21 and visited networks 40 to 42. The home network 21 is one of the IP networks as the mobility management area of the mobile terminals and indicates an IP network including a subnet of home addresses of the mobile terminals, and the visited networks 40 to 42 indicate IP networks as management areas respectively of the anchor nodes 930 to 932.

The home anchor node 920 which is a terminal on which IP is mounted, which exists on the home network 21, and which is a terminal including a function to reply to an address query of the anchor node which the mobile terminals visit (to be referred to as visited anchor node hereinbelow) in addition to the function of HA in HMIPv6. Incidentally, the HA function in HMIPv6 primarily includes a function to manage a correspondence between mobile terminal Home Addresses (HoA) and IP addresses belonging to visited anchor nodes and a function in which a packet addressed to the home address is received and the packet is encapsulated to an IP address belonging to the visited anchor node to be transferred thereto. In the hierarchical edge mobility method, an IP address belonging to an anchor node indicates an address capable of reaching the anchor node and may be, for example, an IP address of the anchor node. Hereinbelow, an IP address belonging to an anchor node is expressed as MAPCoA in some cases. The home anchor node 920 stores, to manage the correspondence of the IP address of the mobile terminal, the home address and the IP address belonging to the anchor node in a binding cache with a correspondence established therebetween. The home anchor node 920 corresponds to, for example, HA in MIPv6 (or MIPv4).

Each of the anchor nodes 930 to 932 is a terminal on which IP is mounted and includes, in addition to the MN function for the home anchor node 920 and the HA function for the access routers 950 to 952, a function to inquire a visited anchor node of a mobile terminal of the home anchor node 920 and a function to transfer context information of a mobile terminal (to be referred to as a visiting terminal hereinbelow) visiting on the visited network between the anchor nodes. The context information is information including HA information which is information indicating a home anchor node conducting mobility management for the mobile terminal and the mobile terminal home address as well as route information indicating an optimal route up to the communication partner of the visiting terminal. The information indicating a home anchor node in the HA information is, for example, an IP address of the home anchor node. Also, the route information is an IP address belonging to the visited anchor node of the communication partner associated with the home address of the communication partner.

The HA function for the access router primarily includes a function to manage a correspondence between home addresses of visiting terminals and IP addresses belonging to the access router connected to the visiting terminals, and a function to encapsulate each packet addressed to the home address to the packet addressed to IP addresses belonging to the access router and transfer the packet. In the hierarchical edge mobility method, an IP address belonging to an access router means an IP address capable of reaching the access router and may be, for example, not only a Care-of Address (CoA) uniquely assigned to each mobile terminal, but also an IP address of the access router. Hereinbelow, an IP address belonging to an access router is expressed as ARCoA in some cases.

Also, the MN function for the home anchor node mainly includes a position registering function for the home anchor node and an encapsulation function for a transmitted packet/a decapsulating function for a received packet and a route optimization function. Moreover, the anchor node stores, to manage a correspondence of the IP addresses of the visiting terminals, the home addresses, the IP addresses belonging to the anchor node, the IP addresses belonging to the access routers, and the IP addresses of the home anchors in the binding cache with a correspondence established therebeween. In addition, the anchor node stores as route information the home address of the communication partner and the IP addresses belonging to the anchor node of the communicating partner with a correspondence established therebeween in the binding cache. Each of the anchor nodes 930 to 932 is, for example, a router implemented by expanding the function of MAP on HMIPv6.

The access routers 950 to 952 are routers on which IP is mounted and respectively include the MN functions for the anchor nodes 930 to 932 as HA. Here, the MN function for the anchor node as HA primarily includes a position registering function for the anchor node and the encapsulation/decapsulation. Also, to manage the correspondence of the IP addresses of mobile terminal, the access router stores the home addresses, the IP addresses belonging to the access router, and the IP addresses belonging to the anchor node in the binding cache with a correspondence established therebeween.

Each of the mobile terminals 60 and 61 is a mobile terminal on which IP is mounted and has an IP address belonging to the home anchor node 920 as a home address. FIG. 1 shows a state in which the mobile terminals 60 and 61 are roaming on the visited networks 40 and 41, respectively. Hereinbelow, the home addresses of the mobile terminals 60 and 61 are expressed respectively as HoA60 and HoA61, the IP addresses belonging to the anchor nodes 930, 931 and 932 are expressed respectively as MAPCoA930, APCoA931 and PCoA932, and the IP addresses belonging to the access routers 950, 951 and 952 are expressed respectively as ARCoA950, ARCoA951 and ARCoA952.

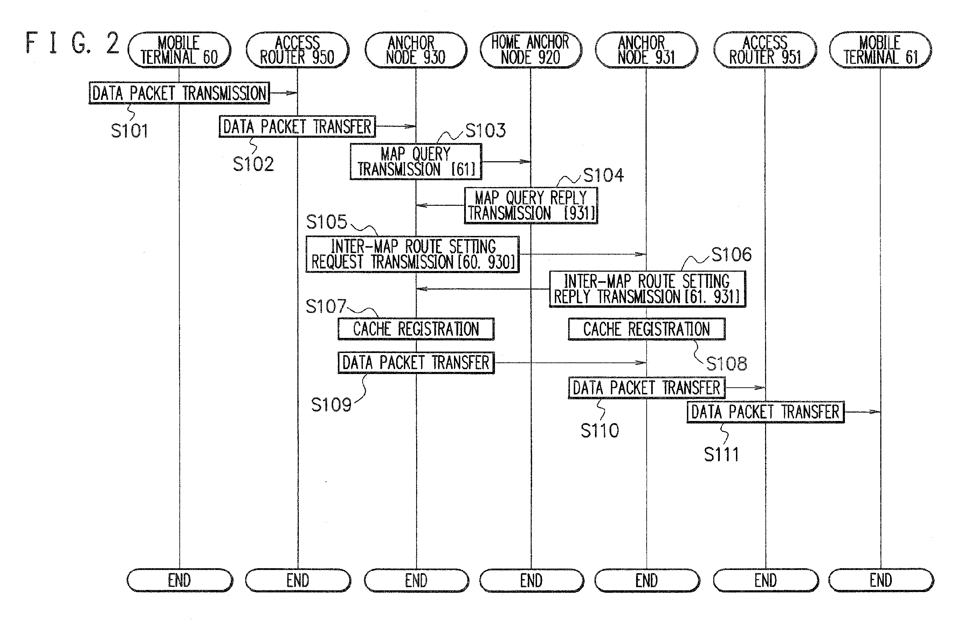

The hierarchical mobility management system configured as above operates as follows. FIG. 2 is a flowchart showing an operation example when the mobile terminal 60 sends a packet to the mobile terminal 61 for the first time in the connection state shown in FIG. 1. First, the mobile terminal 60 transmits a data packet with a source address set to HoA60 and a destination address set to HoA61 (step S101). The data packet reaches via the access router 950 the anchor node 930 being visited by the mobile terminal 60 (step S102). The anchor node 930 searches through the matching cache on the basis of the destination address of the acquired data packet; the anchor node 930 once buffers the data packet if it is determined that the mobile terminal 61 is beyond the control thereof.

Next, to inquire the IP address of the visited anchor node of the mobile terminal 61 of the home anchor node 920, the anchor node 930 sends an MAP query message including the home address of the mobile terminal 61 as the query object to the home anchor node 920 (step S103). When the MAP query message is received, the home anchor node 920 returns an MAP query reply message including an IP address of the visited anchor node 931 of the mobile terminal 61 (step S104).

When the MAP query reply message is received, the anchor node 930 exchanges, on receiving resolution of the IP address of the visited anchor node of the mobile terminal 61, the route information between the anchor nodes 930 and 931 for the communication of the mobile terminals 60 and 61, and registers the information to the binding cache (steps S105 to S108). Specifically, the anchor node 930 transmits an inter-MAP route setting request message including route information (HoA60 and APCoA930) of the mobile terminal 60 (step S105) and the anchor node 931 returns an inter-MAP route setting reply message including route information (HoA61 and MAPCoA931) of the mobile terminal 61 (step S106), such that each of the mobile terminals obtains the route information of the communication partners to store the information in the binding cache (steps S107 and S108).

When the route information is registered, the anchor node 930 attains the buffered data packet and encapsulates and transfers the data packet addressed to HoA61 to PCoA931 according to the route information (step S109). On receiving the encapsulated data packet, the anchor node 931 decapsulates the packet to recognize the mobile terminal 61 of the destination address and encapsulates and transfers the packet again to ARCoA951 according to the contents stored in the binding cache (step S110). The access router 951 catches the data packet addressed to ARCoA951 and decapsulates the packet to recognize the mobile terminal 61 of the destination address and transfers the data packet addressed to the mobile terminal 61 under control thereof (step S111).

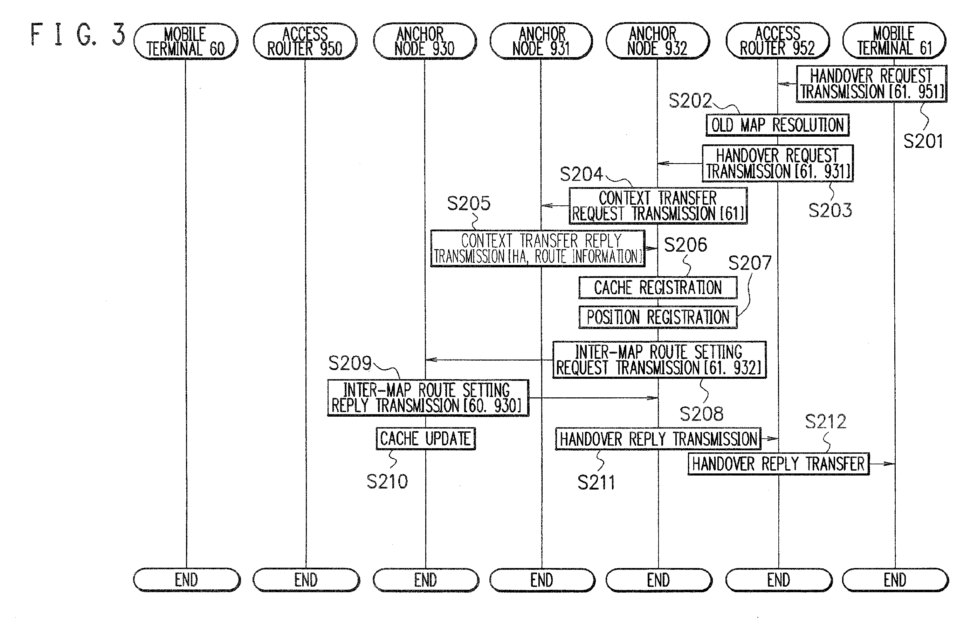

Next, description will be given of operation of handover between anchor nodes in the hierarchical mobility management system shown in FIG. 1. FIG. 3 is a flowchart showing an operation example in a situation wherein handover is taken place during communication with a mobile terminal visiting a region under control of a different anchor node. FIG. 3 shows as an example a situation in which the mobile terminal 61 connected to the access router 951 during communication with the mobile terminal 60 connected to the access router 950, conducts the handover to the access router 952. First, to conduct handover to the access router 952, the mobile terminal 61 transmits to the access router 952 a handover request message as old AR information, the handover request message including an IP address of the access router 951 to which the mobile terminal 61 is connected before the movement (step S201).

After receiving the handover request message, the access router 952 resolves the IP address of the old visited anchor node of the mobile terminal 61 (the IP address of MAP931) based on the old AR information (step S202). The address of the old visited anchor node can be resolved, for example, if each access router holds the address of the access router and the address of the corresponding anchor node in a database.

Subsequently, the access router 952 transmits a handover request message including the IP address of the anchor router 931 as old MAP information to the anchor node 932 (step S203). When the handover request message is received, the anchor node 932 transmits to the anchor router 931, to request transfer of context information of the mobile terminal 61, a context transfer request message for the mobile terminal 61 based on the old MAP information (step S204). The anchor node 931 having received the context transfer request message returns a context transfer reply message including the context information (HA information and route information) of the mobile terminal 61 to the anchor node 932 (step S205).

When the context transfer reply message is received, the anchor node 932 registers the context information of the mobile terminal 61 to the binding cache (step S206). Also, the anchor node 932 carries out position registration to notify a new visited anchor node to the home anchor node 920 of the mobile terminal 61 (step S207).

In addition, after recognizing based on the registered route information that the mobile terminal 61 is communicating with the mobile terminal 60, the anchor node 932 transmits, to change the route information associated with the mobile terminal 61 of the anchor node 930, an inter-MAP route setting request message including route information (HoA61 and NIAPCoA932) of the mobile terminal 61 to the anchor node 930 (step S208). The anchor node 930 having received the inter-MAP route setting request message of the mobile terminal 61 updates the route information up to the mobile terminal 61 and returns an inter-MAP route setting reply request message including route information (HoA60 and MAPCoA930) of the mobile terminal 60 (steps S209 and S210). The anchor node 932 having received the inter-MAP route setting reply message recognizes that the route information of the anchor node 930 has been updated and then returns a handover reply message via the access router 952 to the mobile terminal 61 (steps S211 and S212).

In this manner, according to the hierarchical mobility management system employing the hierarchical edge mobility method, even if the mobile terminal performs the handover between anchor nodes during communication, it is possible to continuously conduct the communication between the mobile terminals 60 and 61 by communicating the inter-MAP route setting information request/reply messages between the anchor nodes.

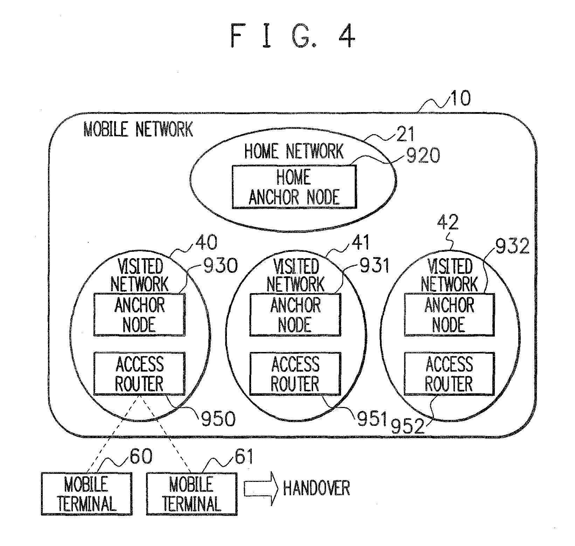

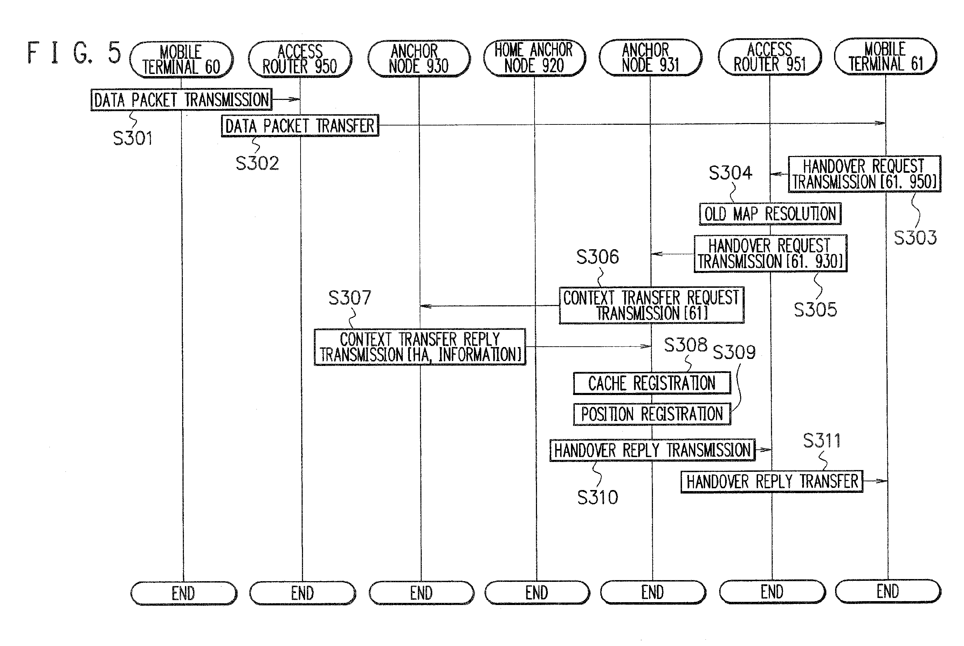

However, as FIGS. 4 and 5 show, in a situation wherein the mobile terminal 60 communicating with the mobile terminal 61 connected to the same access router carries out handover between the anchor nodes, the operation differs from that described above. FIG. 4 is an explanatory diagram showing that a mobile terminal is communicating in the hierarchical mobility management system with a mobile terminal visiting a network under control of the same access router. FIG. 5 is a flowchart showing an operation example in a situation in which a mobile terminal in communication with a mobile terminal visiting a network under control of the same access router accomplishes handover to a different anchor node. As FIG. 5 shows, in a case wherein the mobile terminal 60 transmits a data packet to the mobile terminal 61 connected to the same access router 950, the access router 950 is capable of recognizing by the routing table that the mobile terminal 60 as the communication partner is under control thereof, and hence can transmit the data packet to the mobile terminal 61 without executing the route optimization processing (steps S301 and S302).

Therefore, in the state in which the mobile terminals visiting the same access router are communicating with each other, the anchor node 930 which is the visited anchor node before the movement of the mobile terminal 61 is not managing the route information of the mobile terminal 61 as the communication partner. Hence, the anchor node 930 can return only a context transfer reply message not including the route information in response to the context request message from the anchor node 931 as the visited anchor node of the destination of the movement (step S307); the anchor node 931 cannot recognize the visited anchor node of the communication partner of the mobile terminal 61 and cannot notify the route information to the visited anchor node of the communication partner at handover (cannot carry out the operation of step S208 in FIG. 3).

As a result, to continue the communication after the handover, it is required to again execute the route optimization processing between the anchor nodes; as in the operation at data transmission shown in FIG. 2, an MAP query sequence (steps S103 and S104) is occurred to the home anchor node. That is, when compared with the handover processing during communication with the mobile terminal visiting a network under control of a different anchor node as shown in FIG. 3, there occurs a delay of the propagation period of time between the home network and the visited network.

As above, even if the hierarchical edge mobility method is adopted in the hierarchical mobility management system, there exists the problem in which, when a roaming mobile terminal is communicating with a mobile terminal connected to the same access router, it is not possible to carry out the handover between the anchor nodes at a high speed. This is because the routing of a packet communicated between the mobile terminals is resolved within the access router and the visited anchor node conducts the inter-MAP route setting sequence for the first time at handover of the mobile terminal. More specifically, because the control signal associated with the route setting is sent via the home network and the propagation delay time between the home network and the visited network is added to the handover processing. Hereinbelow, communication between the mobile terminals connected to the same access router is referred to as AR return communication.

It is therefore an object of the present invention to perform the handover at a high speed between the anchor nodes while the roaming mobile terminal is conducting the AR return communication.

### MEANS FOR SOLVING THE PROBLEM

A hierarchical mobility management system in accordance with the present invention is a hierarchical mobility management system for managing mobility of mobile terminals by hierarchically configuring a mobile network, characterized by comprising mobile terminals; home anchor nodes existing on home networks of the mobile terminals for managing mobility within the mobile network; visited anchor nodes for managing mobility within visited networks on which the mobile terminals may exist and which are other than the home networks; and access routers as lower nodes of the anchor nodes, each of the access routers comprising means for requesting route setting of packet communication between the mobile terminals existing under control of the access router from the visited anchor node; each of the visited anchor nodes comprising means for identifying a route of the packet communication between the mobile terminals according to the request from the access router. The mobile terminal mobility is a property in which even if the mobile terminal moves to a different network, IP communication before the movement can be continued.

Additionally, a hierarchical mobility management system in accordance with the present invention is a hierarchical mobility management system for managing mobility of mobile terminals by hierarchically configuring a mobile network, characterized by comprising mobile terminals; home anchor nodes existing on home networks of the mobile terminals for managing mobility within the mobile network; visited anchor nodes for managing mobility within visited networks on which the mobile terminals may exist and which are other than the home networks; and access routers as lower nodes of the anchor nodes, each of the access routers comprising return communication information notifying means for transmitting, return communication information indicating that the mobile terminal is conducting access router return communication to communicate with another terminal existing under control of the access router, to the anchor node as a higher node of the access router, each of the anchor nodes comprising partner terminal visited network destination identifying means for identifying the anchor node of the visited network on which the communication partner terminal of the mobile terminal in the access router return communication exists, on the basis of the return communication information received from the return communication information notifying means, new route notifying means for transmitting, at handover of the mobile terminal, route information of a new packet communication route of the mobile terminal to the anchor node identified by the partner terminal visited network destination identifying means, and route setting means for setting, at reception of the route information from the anchor node other than the pertinent anchor node, the packet communication route of a data packet transmitted to the mobile terminal on the basis of the received route information.

Moreover, in the hierarchical mobility management system in accordance with the present invention, the anchor node comprises partner terminal visited network destination notifying means for transmitting, at handover of the mobile terminal in the access router return communication, partner terminal visited network destination information indicating the anchor node identified by the partner terminal visited network destination identifying means to the anchor node of the visited network as a handover destination; and the new route notifying means may transmit, at reception of the partner terminal visited network destination information from the anchor node of the visited network of the handover source, the route information indicating the new packet route of the mobile terminal to the anchor node of the visited network on which the communication partner terminal of the mobile terminal exists, on the basis of the partner terminal visited network destination information.

Also, in the hierarchical mobility management system in accordance with the present invention, the access router comprises return communication terminal storage means for storing information indicating the mobile terminal and the communication partner terminal in the access router return communication on the access router, return communication detecting means for detecting the mobile terminal in the access router return communication on the basis of contents of a routing table held by the access router and a source IP address and a destination IP address contained in the data packet received from the mobile terminal existing under control of the access router, and return communication information registering means for registering, to the return communication terminal storage means, information indicating the mobile terminal and the communication partner terminal in the access router return communication detected by the return communication detecting means, the return communication information notifying means transmits, at new registration by the return communication information registering means, the return communication information to the anchor node as a higher node of the access router, and the anchor node comprises route information storage means for storing therein the route information indicating the packet communication route up to the communication partner terminal with a correspondence established to the mobile terminal existing on the visited network on which the anchor node exists and intra-visited-network route registration means for creating, on the basis of the anchor node identified by the partner terminal visited network destination identifying means and the return communication information received from the return communication information notifying means, the route information of the mobile terminal in the access router return communication and registering the route information to the route information storage means. The partner terminal visited network destination notifying means can transmit, at handover of the mobile terminal, the route information which is stored in the route information storage means and which is associated with the mobile terminal having conducted the handover, to the anchor node on the visited network as the handover destination, and the new route notifying means identifies, on the basis of the route information received from the partner terminal visited network destination notifying means, the anchor node on the visited network on which the communication partner terminal of the mobile terminal exists and transmits the route information indicating the new packet communication route of the mobile terminal to the identified anchor node.

In addition, the return communication information registering means may register to the return communication terminal storage means the IP address of the mobile terminal and that of the communication partner terminal in a pair.

Furthermore, an access router in accordance with the present invention is an access router in a hierarchical mobility management system for managing mobility of mobile terminals by hierarchically configuring a mobile network, the access router being as a lower node for managing mobility within a visited network on which the mobile terminal may exist and which is other than a home network of the mobile terminal, the access router characterized by comprising return communication information notifying means for transmitting, to an anchor node as a higher node of the access router, return communication information indicating that the mobile terminal is conducting access router return communication with another terminal existing under control of the access router.

Also, an anchor node in accordance with the present invention is an anchor node in a hierarchical mobility management system for managing mobility of mobile terminals by hierarchically configuring a mobile network, the anchor node managing mobility within a visited network on which the mobile terminal may exist and which is other than a home network of the mobile terminal, the anchor node comprising
partner terminal visited network destination identifying means for identifying, on the basis of return communication information received from an access router existing on the visited network including the anchor node, the anchor node on the visited network on which the communication partner terminal of the mobile terminal in access router return communication exists, new route notification means for transmitting, at handover of the mobile terminal, route information indicating a new packet communication route of the mobile terminal to the anchor node identified by the partner terminal visited network destination identifying means, and route setting means for setting, at reception of the route information from an anchor node other than the pertinent anchor node, the packet communication route of a data packet transmitted to the mobile terminal on the basis of the received route information.

In addition, a mobile communication system in accordance with the present invention is a mobile communication system for managing mobility of mobile terminals by hierarchically configuring a mobile network, comprising mobile terminals; home anchor nodes existing on home networks of the mobile terminals for managing movement information within the mobile network; anchor nodes for managing mobility within visited networks on which the mobile terminals may exist and which are other than the home networks; and access routers as lower nodes of the anchor nodes, each of the access routers comprising return communication information notifying means for transmitting, return communication information indicating that the mobile terminal is conducting access router return communication to communicate with another terminal existing under control of the access router, to the anchor node as a higher node of the access router, each of the anchor nodes comprising partner terminal visited network destination identifying means for identifying the anchor node of the visited network on which the communication partner terminal of the mobile terminal in the access router return communication exists, on the basis of the return communication information received from the return communication information notifying means, new route notifying means for transmitting, at handover of the mobile terminal, route information of a new packet communication route of the mobile terminal to the anchor node identified by the partner terminal visited network destination identifying means, and route setting means for setting, at reception of the route information from an anchor node other than the pertinent anchor node, the packet communication route of a data packet transmitted to the mobile terminal on the basis of the received route information.

Moreover, a route setting method in accordance with the present invention is a route setting method used for optimizing a communication route between a mobile terminal and a communication partner by hierarchically configuring a mobile network, characterized in that an access router transmits return communication information indicating that the mobile terminal is conducting access router return communication to communicate with another terminal existing under control of the access router, to an anchor node as a higher node of the access router, an anchor node identifies an anchor node of a visited network on which the communication partner terminal of the mobile terminal in the access router return communication exists, on the basis of the return communication information received from the access router, an anchor node transmits, at handover of the mobile terminal, route information indicating a new packet communication route of the mobile terminal to the identified anchor node, and the identified anchor node sets a packet communication route of a data packet transmitted to the mobile terminal, on the basis of the received route information.

### ADVANTAGE OF THE INVENTION

In accordance with the present invention, even during the AR return communication, a context including route information is communicable between the new and old anchor nodes at handover by the anchor node; it is hence possible to set a route between Ps without passing through the home network, which makes it possible to conduct handover between anchor nodes at a high speed while a roaming mobile terminal is conducting the AR return communication.

### BEST MODE FOR CARRYING OUT THE INVENTION

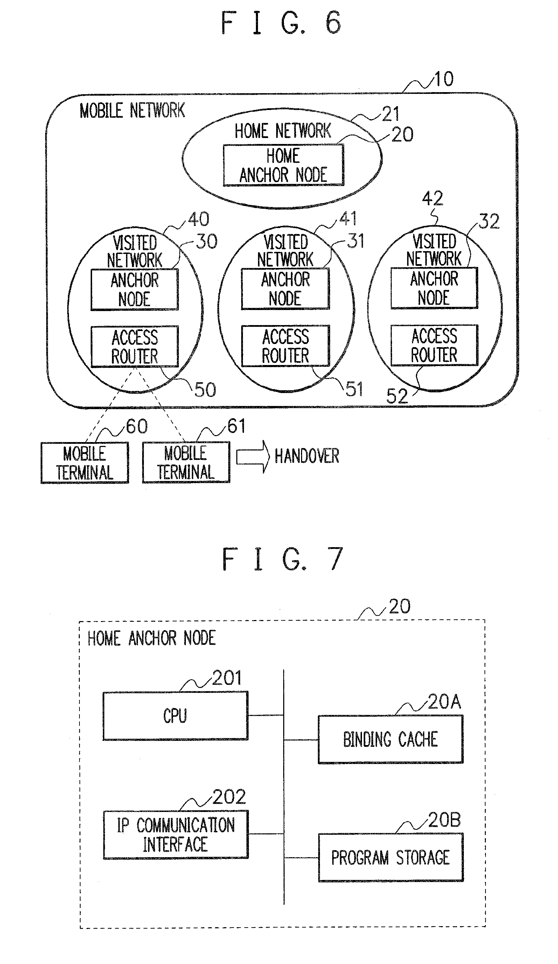

Subsequently, description will be given of an exemplary embodiment of the present invention by referring to drawings. FIG. 6 is a block diagram showing a configuration example of a hierarchical mobility management system in accordance with the present invention. The hierarchical mobility management system shown in FIG. 6 is a hierarchical mobility management system to manage mobility of mobile terminals 60 and 61 on a mobile network 10 and includes a home anchor node 20, anchor nodes 30 to 32, access routers 50 to 52, and the mobile terminals 60 and 61. The mobile network 10 is an IP network to which the mobile terminals 60 and 61 are connectible and includes a home network 21 and visited networks 40 to 42. Here, the home network 21 indicates an IP network as a management area of the home anchor node 20, and the visited networks 40 to 42 indicate IP networks as management areas respectively of the anchor nodes 30 to 32, respectively.

In the present embodiment, the home network is an IP network with a subnet of a home address of a mobile terminal among the IP networks as a management area of mobility of mobile terminals. Additionally, the visited network is an IP network as a management area of mobility of mobile terminals managed by anchor nodes and as a destination of movement of a mobile terminal. Moreover, an expression "existing under control of an access router" indicates "existing on an IP network corresponding to the access router". Incidentally, an expression "visited anchor node" indicates an anchor node which manages a visited network which the mobile terminal is currently visiting. Here, that a mobile terminal is visiting means that the mobile terminal exists on either one IP network.

The home anchor node 20 is a node (e.g., a personal computer, a terminal, a communication controller, or a router) which exists on the home network 21 and manages mobility of mobile terminals (to be referred to as home terminals hereinbelow) including as a home address an IP address belonging thereto. FIG. 7 is a block diagram showing a configuration example of the home anchor node 20. The home anchor node 20 includes, as FIG. 7 shows, a CPU 201, an IP communication interface 202, a binding cache 20A, and a program storage 20B. The CPU 201 executes processing according to a program. The IP communication interface 202 is an interface of an IP network. The binding cache 20A stores a correspondence between an IP address of a home terminal and an IP address of a visited network. In this regard, the binding cache 20A is implemented by a storage of the home anchor node. The program storage 20B stores a program which is read by the CPU 201 to implement operation of the home anchor node.

The home anchor node 20 according to the present invention is a router on which, for example, IP is mounted, the router including a home agent function as the function of HA in HMIPv6 and an anchor node reply function to reply in response to a query for an address of a visited anchor node of a mobile terminal.

The home agent function mainly includes a function in which a home address of a home terminal and an IP address of a visited anchor node of the home terminal are stored with a correspondence established therebetween to thereby manage the correspondence of the IP address of the home terminal and a function which catches the packet addressed to home address of the home terminal to encapsulate data to transfer the data to an IP address of a visited anchor node. In addition, the anchor node reply function is a function to return an IP address of a visited anchor node of a home terminal in response to a query from an anchor node. Also, the binding cache 20A stores at least an IP address of a visited anchor node of a home terminal with a correspondence established to the home address of the home terminal.

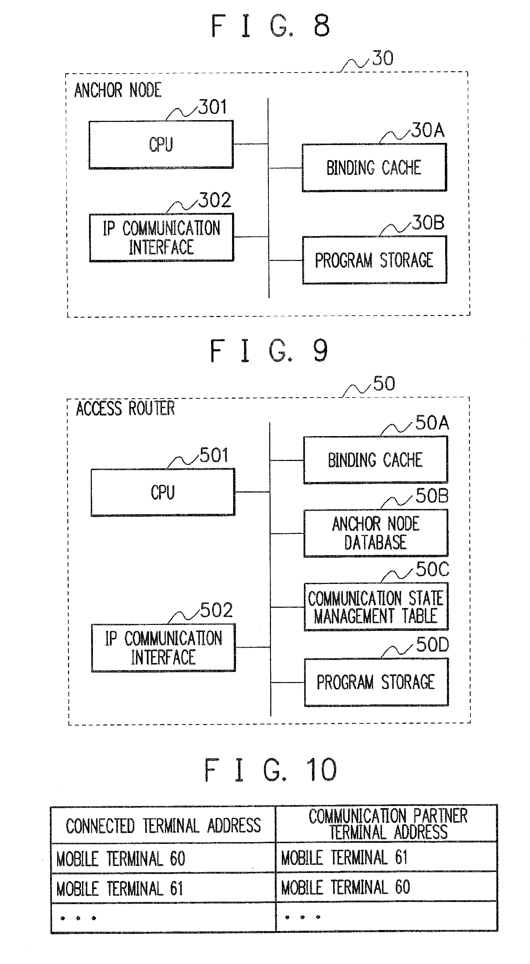

The anchor nodes 30 to 32 are lower node terminals of the home anchor node 20, the mobile terminals managing mobility of mobile terminals (to be referred to visiting terminals) existing on the visited networks. FIG. 8 is a block diagram showing a configuration example of the anchor node 30. The anchor node 30 includes, as FIG. 8 shows, a CPU 301, an IP communication interface 302, a binding cache 30A, and a program storage 30B. The CPU 301 executes processing according to a program. The IP communication interface 302 is an interface of an IP network. The binding cache 30A stores an IP address of a visiting terminal, an IP address of a higher node, an IP address of a lower node, and route information of a communication partner with a correspondence established therebetween. Incidentally, the binding cache 30A is implemented by a storage of the anchor node. The program storage 30B stores a program which is read by the CPU 301 to execute operation of the anchor node. In this connection, although FIG. 8 shows a block diagram of the anchor node 30, the other anchor nodes are also similarly constructed.

Each of the anchor nodes 30 to 32 according to the present invention is a node on which IP is mounted (e.g., a personal computer, a terminal, a communication controller, or a router) and includes a mobile node function as a function of MN for a home anchor node, a home agent function as a function of HA for an access router, an anchor node query function to inquire of a home anchor node an address of a visited anchor node, a context information transfer function to transfer context information between the new and old visited anchor nodes, and an intra-visited-network route setting function to set route information of a mobile terminal in AR return communication on the visited network.

The mobile function in an anchor node primarily includes a position registering function for a home anchor node, transmitted packet encapsulation/received packet decapsulation functions, and a route optimization function. The position registering function specifically is a function to notify information indicating a visited destination of a visiting terminal to a home anchor node. Here, information indicating a visited destination of the visiting terminal may be information indicating a lower management node (an anchor node in this situation) viewed from the home anchor node, for example, an IP address of a visited anchor node. Also, the transmitted packet encapsulation/received packet decapsulation functions specifically include a function to encapsulate a packet addressed to a communication partner of the visited terminal according to the route information registered in the binding cache and a function to decapsulate the encapsulated packet addressed to the visiting terminal into an original packet. Additionally, the route optimization function concretely is a function to notify route information indicating its own address, as an optimal route of the visited terminal to the visited anchor node of the communication partner, and a function to set the route information notified from the visited anchor node of the communication partner to the binding cache. In the present embodiment, the route information is information including a home address of the communication partner and an IP address of the visited anchor node of the communication partner.

Furthermore, the home agent function in the anchor node mainly includes a function which stores a home address of the visiting terminal and an IP address of the access router under which the visiting terminals exists in the binding cache 30A, with a correspondence established therebetween to thereby manage the correspondence of the IP address of the visiting terminal and a function which acquires a packet addressed to an IP address of the visited anchor node of the visiting terminal to encapsulate the packet addressed to the IP address of the visited access router so as to transfer the packet therefrom. Additionally, the anchor node query function is a function to inquire of the home anchor node an address of the visited anchor node of the communication partner.

Also, the context transfer function is a function which transfers, for a visiting terminal moved into a visited network through handover, context information between the anchor nodes of the handover source and the handover destination. In the present embodiment, the context information is information including the HA information indicating a home address of the mobile terminal and an IP address of the home anchor node of the mobile terminal and the route information. The context information transfer means that the context node information is transmitted from the anchor node of the handover source in response to a request issued from the anchor node of the handover destination.

Furthermore, the intra-visited-network route setting function is a function which sets, in response to a request from an access router, route information indicating that the visited network is an optimal route, for the mobile terminal being conducting the AR return communication. The route information setting may be, for example, registration of the information by internally communicating a route setting request message and a route setting reply message. In addition, the binding cache 30A stores, in association with the home address of the visiting terminal, at least an IP address of the access router to which the visiting terminal is connected, an IP address of the home anchor node of the visiting terminal, and route information for the communication partner.

The access routers 50 to 52 are lower-node routers of the anchor node, the routers managing mobility of mobile terminals (to be referred to as connected terminals hereinbelow) connected thereto. FIG. 9 is a block diagram showing a configuration example of the access router 50. The access router 50 includes, as FIG. 9 shows, a CPU 501, an IP communication interface 502, a binding cache 50A, an anchor node database 50B, a communication state management table 50C, and a program storage 50D. The CPU 501 executes processing according to a program. The IP communication interface 502 is an interface of an IP network. The binding cache 50A stores a correspondence between an IP address of a connected terminal and an IP address of a visited network. Incidentally, the binding cache 50A is implemented by a storage of the access router. The anchor node database 50B stores a correspondence of anchor nodes with respect to access routers existing on the mobile network 10. The communication state management table 50C is a table including information indicating that a connected terminal is in the AR return communication. In this regard, specifically, the table 50C is stored in the storage of the access router. The program storage 50D stores programs which are read by the CPU 501 to execute operation of the access router. Incidentally, although FIG. 9 shows a block diagram of the access router 50, the other access routers are also similarly configured.

Each of the access routers 50, 51 and 52 according to the present invention is, for example, a router on which IP is mounted, the router including a mobile node function as the MN function with an anchor node as HA, an AR return communication management function to manage a state of the AR return communication, and an AR return communication notifying function to notify the anchor node that the AR return communication is being conducted.

The mobile node function in the access router primarily includes a position registering function for an anchor node and transmitted packet encapsulation/received packet decapsulation functions. The position registering function is concretely a function to notify information indicating a visited destination of a connected terminal to the anchor node. Here, the information indicating a visited destination of a connected terminal may be information indicating a lower management node (an access router in this situation) viewed from the anchor node, for example, an IP address of the access router. Also, the transmitted packet encapsulation/received packet decapsulation functions specifically include a function to encapsulate a packet addressed to the communication partner of the connected terminal to the visited anchor node as a higher management node and a function to decapsulate the encapsulated packet addressed to the connected terminal into an original packet.

The AR return communication management function is a function in which based on the source and destination addresses of the received data packet and the registered contents of the routing table, a check is made to determine whether or not the AR return communication is conducted, and information of the mobile terminals (the connected terminal and the communication partner) in the AR return communication is stored in the communication state management table 50C to thereby manage the AR return communication state. The AR return communication notifying function is a function to transmit to the visited anchor node, at detection of notification of new AR return communication, an intra-network route setting request message indicating that route information in which the optimal route is within the visited network is to be set to the mobile terminal in the AR return communication.

The binding cache 50A stores a current IP address assigned to the access router of the connected terminal, the home address of the connected terminal, and an IP address of the visited anchor node with a correspondence established therebetween. The anchor node database 50B stores, for an access router existing on the mobile network 10, the IP address of the access router and an IP address of an anchor node as a higher management node of the access router with a correspondence established therebetween. The communication state management table 50C stores information indicating whether or not the connected terminal is in the AR return communication. For example, as FIG. 10 shows, the information may be stored in a pair including a terminal address of the connected terminal in the AR return communication and a terminal address of the communication partner. FIG. 10 is a registration example of the communication state management table 50C.

Each of the mobile terminals 60 and 61 is a mobile terminal on which IP is mounted and is, for example, a note-sized personal computer, a PDA, or a cellular phone. Also, in FIG. 6, the mobile terminals 60 and 61 are terminals each of which has as a home address an IP address belonging to the home anchor node 20 and are terminals roaming on the visited networks 40 and 41, respectively.

In this connection, although FIG. 6 shows a configuration example including one home anchor node, three anchor nodes, three access routers, and two mobile terminals, the number of mobile terminals is not limited and the communication partner of the mobile terminal may be a terminal which does not move. Also, a plurality of home anchor nodes may be disposed in association with mobile terminals. In addition, a desired number of anchor nodes and access routers may be disposed in association with the size of the mobile network 10, the number not being limited to three.

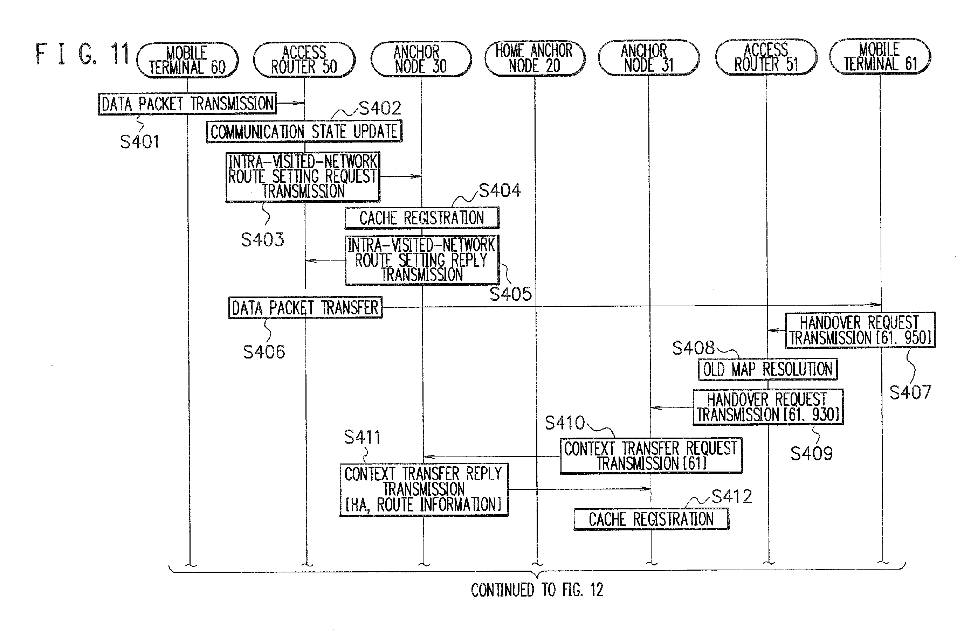

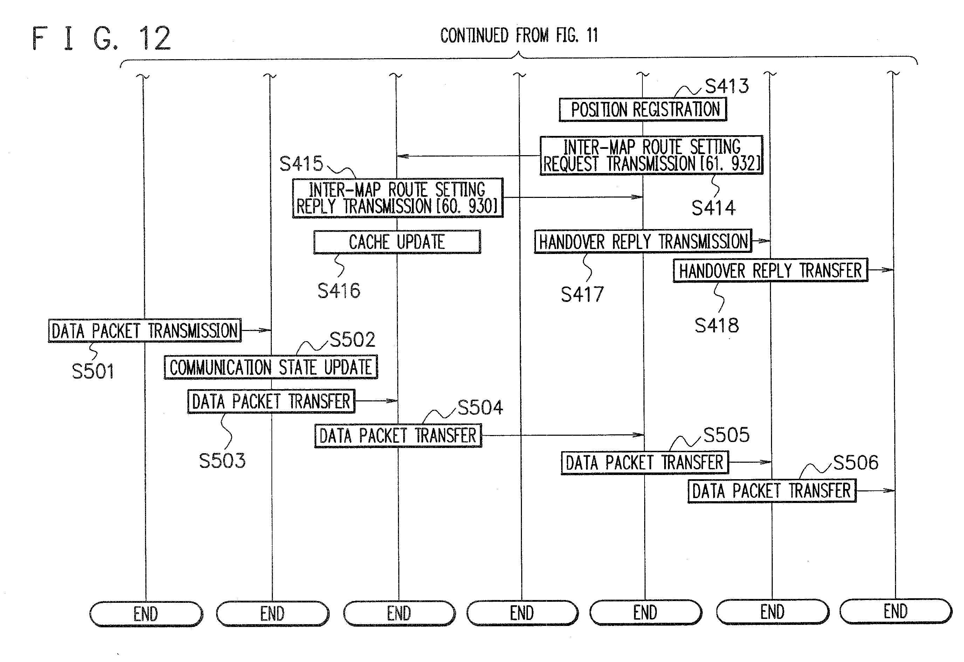

Next, description will be given of operation of a hierarchical mobility management system in the present embodiment by referring to FIGS. 11 and 12. FIGS. 11 and 12 are flowcharts showing an operation example to conduct handover in a hierarchical mobility management system in accordance with the present invention to a different anchor node during communication with a mobile terminal existing on a network under control of the same access router. First, description will be given of operation in a situation wherein the mobile terminal 60 connected to the access router 50 starts communication with the mobile terminal 61 similarly connected to the access router 50. The mobile terminal 60 transmits a data packet with a source address set to the home address of terminal 60 and a destination address set to the home address of terminal 61 (step S401).

The access router 50 receives the data packet. When the data packet is received, the CPU 501 of the access router 50 once buffers the packet. Next, the CPU 501 recognizes, on the basis of the source and destination addresses of the received packet and the contents registered to the routing table, that the mobile terminal 61 as the communication partner is under control thereof (the mobile terminal 61 exists on an IP network corresponding to the access router 50). That is, it is detected that the communication between the mobile terminals 60 and 61 is the AR return communication. When it is detected that the communication associated with the received data packet is the AR return communication, the CPU 501 searches to determine whether or not the information that the mobile terminals 60 and 61 are in the AR return communication is beforehand registered to the communication state management table 50C.

As a result of the search, if the pertinent entry is not present, it is assumed that new AR return communication has been detected, and information that the mobile terminals 60 and 61 are in the AR return communication is registered to the communication state management table 50C (step S402). For example, if the table 50C is constructed as shown in FIG. 10, the CPU 501 may store HoA60 in the connected terminal address and HoA61 in the communication partner terminal address as well as may store, in a pair, HoA61 in the connected terminal address and HoA60 in the communication partner terminal address.

If the new AR return communication is detected, the CPU 501 transmits, to the anchor node 30 as the visited anchor node managing the visited network on which the CPU 501 exists, an intra-visited-network route setting request message indicating the setting of route information on the visited network to the mobile terminals 60 and 61 (step S403). The intra-visited-network route setting request message is a message including, for example, the home addresses of the mobile terminals 60 and 61. If the new AR return communication has not been detected, the CPU 501 transfers the data packet according to the routing table or assumes the packet as a packet addressed to an external network and encapsulates the packet to the higher anchor node (the anchor node 30) and transfers the packet thereto.

The anchor node 30 receives the intra-visited-network route setting request message. When the intra-visited-network route setting request message is received, the CPU 301 of the anchor node 30 registers route information with the own unit (anchor node 30) set as the optimal route to the binding cache 30A for the interval between the mobile terminals (mobile terminals 60 and 61) included in the message (step S404). Additionally, after having registered the route information, the CPU 301 returns an intra-visited-network route setting reply message indicating the registration of the route information to the access router (access router 50) as the source of the intra-visited-network route setting request message (step S405).

The access router 50 receives the intra-visited-network route setting reply message. When the intra-visited-network route message is received, the CPU 501 of the access router 50 acquires a data packet beforehand buffered and transfers the packet to a mobile terminal 61 under control thereof (existing on an IP network corresponding to the access router 50 (step S406).

Subsequently, description will be given of operation in a situation wherein handover is performed between anchor nodes during communication with a mobile terminal connected to the same access router. Here, description will be given of an example in which the mobile terminal 61 connected to the access router 50 communicating with the mobile terminal 60 similarly connected thereto carries out handover to the access router 51. When the mobile terminal 61 detects the movement, the mobile terminal 61 transmits a handover request including the home address and old AR information to the access router 51 as the handover destination (step S407). The old AR information is information indicating the access router as the handover source and is, for example, an IP address of the access router.

The access router 51 as the handover destination receives the handover request message. At reception of the handover request message, the CPU 501 of the access router 50 resolves the address of the anchor node (also referred to as old MAP hereinbelow) of the handover source on the basis of the old AR information and transfers the handover request message including old MAP information to a higher anchor node (anchor node 31; steps S408 and S409). The old MAP information is information indicating the anchor node of the handover source and is, for example, an IP address of the anchor node. The CPU 501 can resolve the address of the old MAP by searching through the anchor node database 51B using the old AR information.

The higher anchor node 31 receives the handover request message. When the handover request message is received, the CPU 301 of the anchor node 31 transmits a context transfer request message which targets the mobile terminal 61 as the object to the anchor node (anchor node 30) as the handover source on the basis of the old MAP information (step S410). The context transfer request message is a message indicating a request to transfer context information, the context transfer request message including information indicating the objective mobile terminal, for example, the home address of the mobile terminal.

The anchor node 30 as the handover source receives the context request. When the request is received from the anchor node 31 as the handover destination, the CPU 301 of the anchor node 30 reads from the binding cache 30A context information (HA information and route information) of the objective mobile terminal 61 and returns a context reply message including the readout context information to the anchor node 31 (step S411). In this case, the CPU 301 recognizes that the mobile terminal 61 has moved and deletes the contents stored in association with HoA61, from the binding cache 30A.

The anchor node 31 as the handover destination receives the context transfer reply message. At reception of the context transfer reply message from the anchor node 30 as the handover source, the CPU 301 of the anchor node 31 registers context information of the mobile terminal 61 to the binding cache 31A (step S412). Also, the CPU 301 conducts position registration to the home anchor node 20 (step S413). The position registration can be accomplished by transmitting a position registration request message including the home address of the mobile terminal as the object of the position registration and the IP address of the visited anchor node.

Next, the CPU 301 of the anchor node 31 recognizes that the mobile terminal 61 is communicating with the mobile terminal 60 on the basis of the registered route information and sends an inter-MAP route setting request message including route information associated with the mobile terminal 61 to the visited anchor node 30 of the mobile terminal 60 (step S414). The inter-MAP route setting request message is, for example, a message including the home address of the mobile terminal as the object of the route information and the IP address of the visited anchor node.

The visited anchor node 30 as the communication partner receives the inter-MAP route setting request message. When the inter-MAP route setting message is received, the CPU 301 of the anchor node 30 updates the route information of the mobile terminal 61 (communication partner) stored in the binding cache 30A with a correspondence established to the mobile terminal 60 and returns an inter-MAP route setting reply message including route information up to the mobile terminal 60 (steps S415 and S416).

The anchor node 31 receives the inter-MAP route setting reply message. At reception of the inter-MAP route setting reply message, the CPU 311 of the anchor node 31 recognizes that the route information has been updated in the visited anchor node 30 of the communication partner of the mobile terminal 61 and returns a handover reply message via the access router 51 to the mobile terminal 61 (steps S417 and S418).

Additionally, the access router 50 as the handover source updates the routing table through operation such as confirmation of connection. In this case, for example, if the mobile terminal 60 has transmitted a data packet to the mobile terminal 61 (step S501), the CPU 501 of the access router 50 recognizes, according to the source and destination addresses of the received data packet and the registered contents of the routing table, that the mobile terminal 61 as the communication partner is beyond control thereof (absence of the mobile terminal 61 on an IP network corresponding to the access router 50), and updates the communication state management table 51C to information indicating that the communication associated with the mobile terminals 60 and 61 is other than the AR return communication (step S502). Also, the CPU 501 assumes that the received packet is addressed to an external network and encapsulates the packet and transfers the packet to the higher anchor node 30 (step S503). In this connection, the update operation of the communication state management table 51C which is conducted to release the AR return communication state and which has been described to be conducted at data packet reception may also be carried out when the routing table is updated.

The CPU 301 of the anchor node 30 having received the encapsulated data packet from the access router 50 decapsulates the received data packet to recognize the mobile terminal 61 as the destination address and again encapsulates and transfers the packet to the visited anchor node 31 of the mobile terminal 61 on the basis of information of the visited destination stored in the binding cache 30A (step S504).

The CPU 301 of the anchor node 31 having received the encapsulated data packet from the anchor node 30 decapsulates the received data packet and recognizes the mobile terminal 61 as the destination address to transfer the packet via the access router 51 to the mobile terminal 61 (steps S505 and S506).

In this fashion, according to the present embodiment, even if a mobile terminal performs handover between anchor nodes during communication with a terminal connected to the same access router, the handover can be accomplished in the same procedure as for the handover during the communication with a terminal visiting the different anchor node as shown in FIG. 3.

In other words, the access router detects new AR return communication to notify the communication to a higher visited anchor node so that the visited anchor node keeps, before the handover, route information associated with the mobile terminal communicating within the visited network; therefore a roaming mobile terminal can conduct the handover between anchor nodes at a high speed during the AR return communication.

In this regard, according to the present embodiment, the partner terminal visited destination identifying means, the partner terminal visited destination notifying means, the new route notifying means, and the route setting means are implemented by the CPU 301. Also, the route information storage means is implemented by the binding cache 30A. In addition, the return communication information notifying means, the return communication detecting means, the return communication registering means, and the intra-visited-network route registering means are implemented by the CPU 501. Moreover, the return communication storage means is achieved by the communication state management table 50C.

Additionally, as another exemplary embodiment, it is also possible to employ a configuration in which the anchor node and the access router are degenerated. That is, it is also possible to employ a configuration in which the HM function for AR is removed from the anchor node and the MN function with an anchor node as HM is removed from the access node. Also in such configuration, the operation of the route setting for the AR return communication is similar to that of a first exemplary embodiment.

### EXEMPLARY EMBODIMENT

Next, operation of a first exemplary embodiment will be described by use of a concrete embodiment. For this embodiment, as the first exemplary embodiment shown in FIGS. 7, 11, and 12, description will be given of operation in a situation wherein a mobile terminal 60 connected to an access router 50 starts communication with a mobile terminal 61 connected similarly to the access router 50 and operation in a situation wherein the mobile terminal 61 conducts handover to the access router 51. Hereinbelow, the home addresses of the mobile terminals 60 and 61 are expressed as HoA60 and HoA61, the IP address of the home anchor node 20 as HANA20, the IP addresses of the anchor nodes 30, 31 and 32 as ANA30, ANA31 and ANA32, and the IP addresses of the access routers 50, 51 and 52 as ARA50, ARA51 and ARA52.

First, the mobile terminal 60 transmits a data packet with the source address set to HoA60 and the destination address set to HoA61 (step S401).

When the data packet is received, the CPU 501 of the access router 50 once buffers the packet and detects that the communication between the mobile terminals 60 and 61 is the AR return communication based on the source and destination addresses of the received packet and the registered contents of the routing table. After detecting that the communication for the received data packet is the AR return communication, the CPU 501 searches to determine whether or not HoA60 and HoA61 have been registered to the communication state management table 50C.

If the pertinent entry is absent as a result of the search, the CPU 501 assumes that new AR return communication has been detected, and stores the connected terminal address HoA60 and the mobile terminal address HoA61 of the communication partner in the communication state management table 50C and stores, in a pair, the connected terminal address HoA61 and the mobile terminal address HoA60 of the communication partner therein (step S402).

If new AR return communication has been detected, the CPU 501 transmits an intra-visited-network route setting request message including HoA60 and HoA61 to the visited anchor node 30 (step S403). If the new AR return communication has not been detected, the CPU 501 transfers the data packet to the mobile terminal 61 according to the routing table or encapsulates and transfers the packet to the anchor node 30 by assuming the packet is to be addressed to an external network.

When the intra-visited-network route setting request message is received, the CPU 301 of the anchor node 30 stores ANA30 with a correspondence established to HoA60 and route information, i.e., HoA61 and ANA30 in the binding cache 30A; similarly, ANA30 with a correspondence established to HoA61 and oA60 and ANA30 as route information in the binding cache 30A (step S404). Also, the CPU 301 returns, after registering the route information, an intra-visited-network route setting reply message to the access router 50 (step S405).

After the intra-visited-network route setting reply message is received, the CPU 501 of the access router 50 acquires the data packet beforehand buffered and transfers the packet to the mobile terminal 61 under control thereof (existing on an IP network corresponding to the access router 50; step S406).

In this situation, if the mobile terminal 61 detects the movement, the mobile terminal 61 transmits a handover request including HoA61, and ARA50 as old AR information, to the access router 51 as the handover destination (step S407). At reception of the handover request message, the CPU 501 of the access router 50 searches through the anchor node database 51B on the basis of the old AR information to read the address of the anchor node 30 as the handover source and transfers a handover request message including ANA30 as the old MAP information to the anchor node 31 (steps S408 and S409).

When the handover request message is received, the CPU 301 of the anchor node 31 transmits a context transfer request message including HoA61 to the anchor node 30 on the bases of the old MAP information (step S410). At reception of the context request, the CPU 301 of the anchor node 30 reads HANA20 associated with HoA61 from the binding cache 30A and reads therefrom the route information (HoA60 and ANA30) stored in step S404, and returns to the anchor node 31 a context context reply message including HoA61 and HANA20 and route information, i.e., HoA60 and ANA30 (step S411).

After receiving the context transfer reply message from the anchor node 30, the CPU 301 of the anchor node 31 stores HANA20 with a correspondence established to HoA61 and route information, i.e., HoA60 and ANA 30 in the binding cache 30A (step S412). Additionally, the CPU 301 conducts position registration to the home anchor node 20 (step S413).

Next, the CPU 301 of the anchor node 31 recognizes that the mobile terminal 61 is communicating with the mobile terminal 60 based on the registered route information and sends an inter-MAP route setting request message including HoA61 and ANA31 to the visited anchor node 30 of the mobile terminal 60 (step S414).

At reception of the inter-MAP route setting request message, the CPU 301 of the anchor node 30 updates ANA30 as the route information stored with correspondence established to HoA60 in step S404 to ANA31 and returns an inter-MAP route setting reply message including HoA60 and ANA30 (steps S415 and S416).

When the inter-MAP route setting reply message is received, the CPU 311 of the anchor node 31 recognizes that the route information is updated in the visited anchor node 30 of the communication partner of the mobile terminal 61 and returns a handover reply message via the access router 51 to the mobile terminal 61 (steps S417 and S418).

Also, the access router 50 as the handover source updates the routing table through operation such as confirmation of connection. In this situation, for example, if the mobile terminal 60 sends a data packet to the mobile terminal 61 (step S501), the CPU 501 of the access router 50 deletes the entry of the connected terminal address HoA61 and that of the terminal address HoA61 of the communication partner from the communication state management table 51C on the basis of the source and destination addresses of the received packet and the registered contents of the routing table (step S502).

### INDUSTRIAL APPLICABILITY

In accordance with the present invention, the technique is applicable to communication enterprise or carrier field conducting IP communication services regardless of wired and wireless access methods such as mobile communication carriers, fixed communication carriers, and fixed-and-mobile communication carriers.

### BRIEF DESCRIPTION OF DRAWINGS

[FIG. 1] is a block diagram showing a configuration example of a hierarchical mobility management system employing a hierarchical edge mobility method.
[FIG. 2] is a flowchart showing an operation example at transmission of a packet in a hierarchical mobility management system employing a hierarchical edge mobility method.
[FIG. 3] is a flowchart showing an operation example to conduct handover in a hierarchical mobility management system employing a hierarchical edge mobility method.
[FIG. 4] is a block diagram showing a configuration example of a hierarchical mobility management system employing a hierarchical edge mobility method.
[FIG. 5] is a flowchart showing an operation example to conduct handover in a hierarchical mobility management system employing a hierarchical edge mobility method.
[FIG. 6] is a block diagram showing a configuration example of a hierarchical mobility management system in accordance with the present invention.
[FIG. 7] is a block diagram showing a configuration example of the home anchor node 20.
[FIG. 8] is a block diagram showing a configuration example of the anchor node 30.
[FIG. 9] is a block diagram showing a configuration example of the access router 50.
[FIG. 10] is a registration example of the communication state management table 50C.
[FIG. 11] is a flowchart showing an operation example to conduct handover in a hierarchical mobility management system in accordance with the present invention.
[FIG. 12] is a flowchart showing an operation example to conduct handover in a hierarchical mobility management system in accordance with the present invention (continued from FIG. 11).

### DESCRIPTION OF REFERENCE NUMERALS

- 10: Mobile network
- 20: Home anchor node
- 21: Home network
- 30-32: Anchor node
- 40-42: Visited network
- 50-52: Access router
- 60, 61: Mobile terminal

## Claims

1. A hierarchical mobility management system for managing mobility of mobile terminals by hierarchically configuring a mobile network, **characterized by** comprising:
mobile terminals;
home anchor nodes existing on home networks of the mobile terminals for managing mobility within the mobile network;
visited anchor nodes for managing mobility within visited networks on which the mobile terminals may exist and which are other than the home networks; and
access routers as lower nodes of the anchor nodes,
each of the access routers comprising means for requesting route setting of packet communication between the mobile terminals existing under control of the access router from the visited anchor node;
each of the visited anchor nodes comprising means for identifying a route of the packet communication between the mobile terminals according to the request from the access router.

2. A hierarchical mobility management system for managing mobility of mobile terminals by hierarchically configuring a mobile network, **characterized by** comprising:
mobile terminals;
home anchor nodes existing on home networks of the mobile terminals for managing mobility within the mobile network;
visited anchor nodes for managing mobility within visited networks on which the mobile terminals may exist and which are other than the home networks; and
access routers as lower nodes of the anchor nodes,
each of the access routers comprising
return communication information notifying means for transmitting, return communication information indicating that the mobile terminal is conducting access router return communication to communicate with another terminal existing under control of the access router, to the anchor node as a higher node of the access router,
each of the anchor nodes comprising
partner terminal visited network destination identifying means for identifying the anchor node of the visited network on which the communication partner terminal of the mobile terminal in the access router return communication exists, on the basis of the return communication information received from the return communication information notifying means,
new route notifying means for transmitting, at handover of the mobile terminal, route information of a new packet communication route of the mobile terminal to the anchor node identified by the partner terminal visited network destination identifying means, and
route setting means for setting, at reception of the route information from the anchor node other than the pertinent anchor node, the packet communication route of a data packet transmitted to the mobile terminal on the basis of the received route information.

3. The hierarchical mobility management system in accordance with claim 2, wherein:
the anchor node comprises partner terminal visited network destination notifying means for transmitting, at handover of the mobile terminal in the access router return communication, partner terminal visited network destination information indicating the anchor node identified by the partner terminal visited network destination identifying means to the anchor node of the visited network as a handover destination; and
the new route notifying means
transmits, at reception of the partner terminal visited network destination information from the anchor node of the visited network of a handover source, the route information indicating the new packet route of the mobile terminal to the anchor node of the visited network on which the communication partner terminal of the mobile terminal exists, on the basis of the partner terminal visited network destination information.

4. The hierarchical mobility management system in accordance with claim 3, wherein:
the access router comprises
return communication terminal storage means for storing information indicating the mobile terminal and the communication partner terminal in the access router return communication on the access router,
return communication detecting means for detecting the mobile terminal in the access router return communication on the basis of contents of a routing table held by the access router and a source IP address and a destination IP address contained in the data packet received from the mobile terminal existing under control of the access router, and
return communication information registering means for registering, to the return communication terminal storage means, information indicating the mobile terminal and the communication partner terminal in the access router return communication detected by the return communication detecting means,
the return communication information notifying means transmits, at new registration by the return communication information registering means, the return communication information to the anchor node as a higher node of the access router,
the anchor node comprises
route information storage means for storing therein the route information indicating the packet communication route up to the communication partner terminal with a correspondence established to the mobile terminal existing on the visited network on which the anchor node exists and
intra-visited-network route registration means for creating, on the basis of the anchor node identified by the partner terminal visited network destination identifying means and the return communication information received from the return communication information notifying means, the route information of the mobile terminal in the access router return communication and registering the route information to the route information storage means,
the partner terminal visited network destination notifying means transmits, at handover of the mobile terminal, the route information which is stored in the route information storage means and which is associated with the mobile terminal having conducted the handover, to the anchor node on the visited network as the handover destination, and
the new route notifying means identifies, on the basis of the route information received from the partner terminal visited network destination notifying means, the anchor node on the visited network on which the communication partner terminal of the mobile terminal exists and transmits the route information indicating the new packet communication route of the mobile terminal to the identified anchor node.

5. The hierarchical mobility management system in accordance with claim 4, wherein the return communication information registering means registers to the return communication terminal storage means the IP address of the mobile terminal in the access router return communication and that of the communication partner terminal in a pair.

6. In a hierarchical mobility management system for managing mobility of mobile terminals by hierarchically configuring a mobile network,
an access router as a lower node for managing mobility within a visited network on which the mobile terminal may exist and which is other than a home network of the mobile terminal,
the access router **characterized by** comprising
return communication information notifying means for transmitting, to an anchor node as a higher node of the access router, return communication information indicating that the mobile terminal is conducting access router return communication with another terminal existing under control of the access router.

7. In a hierarchical mobility management system for managing mobility of mobile terminals by hierarchically configuring a mobile network,
an anchor node for managing mobility within a visited network on which the mobile terminal may exist and which is other than a home network of the mobile terminal,
the anchor node **characterized by** comprising
partner terminal visited network destination identifying means for identifying, on the basis of return communication information received from an access router existing on the visited network including the anchor node, the anchor node on the visited network on which the communication partner terminal of the mobile terminal in access router return communication exists,
new route notification means for transmitting, at handover of the mobile terminal, route information indicating a new packet communication route of the mobile terminal to the anchor node identified by the partner terminal visited network destination identifying means, and
route setting means for setting, at reception of the route information from the anchor node other than the pertinent anchor node, the packet communication route of a data packet transmitted to the mobile terminal on the basis of the received route information.

8. A mobile communication system for managing mobility of mobile terminals by hierarchically configuring a mobile network, **characterized by** comprising:
mobile terminals;
home anchor nodes existing on home networks of the mobile terminals for managing movement information within the mobile network;
anchor nodes for managing mobility within visited networks on which the mobile terminals may exist and which are other than the home networks; and
access routers as lower nodes of the anchor nodes,
each of the access routers comprising
return communication information notifying means for transmitting, return communication information indicating that the mobile terminal is conducting access router return communication to communicate with another terminal existing under control of the access router, to the anchor node as a higher node of the access router,
each of the anchor nodes comprising
partner terminal visited network destination identifying means for identifying the anchor node of the visited network on which the communication partner terminal of the mobile terminal in the access router return communication exists, on the basis of the return communication information received from the return communication information notifying means,
new route notifying means for transmitting, at handover of the mobile terminal, route information of a new packet communication route of the mobile terminal to the anchor node identified by the partner terminal visited network destination identifying means, and
route setting means for setting, at reception of the route information from the anchor node other than the pertinent anchor node, the packet communication route of a data packet transmitted to the mobile terminal on the basis of the received route information.

9. A route setting method used for optimizing a communication route between a mobile terminal and a communication partner by hierarchically configuring a mobile network, **characterized in that**:
an access router transmits return communication information indicating that the mobile terminal is conducting access router return communication to communicate with another terminal existing under control of the access router, to an anchor node as a higher node of the access router,
the anchor node identifies the anchor node of a visited network on which the communication partner terminal of the mobile terminal in the access router return communication exists, on the basis of the return communication information received from the access router,
the anchor node transmits, at handover of the mobile terminal, route information indicating a new packet communication route of the mobile terminal to the identified anchor node, and
the identified anchor node sets a packet communication route of a data packet transmitted to the mobile terminal, on the basis of the received route information.
